# EUROPEAN PATENT APPLICATION

(11) **EP 1 761 092 A1**
(43) Date of publication of application: **07.03.2007**
(21) Application number: 05425622.7
(22) Date of filing: 06.09.2005
(51) Int. Cl.: H04Q 7/38

(54) **A method and system for hierarchical paging in communication networks, computer program product therefor**

(71) Applicant: Siemens S.p.A., 20126 Milano (IT)
(72) Inventor: Bettoni, Pietro, 24060 Edine-gaiano (BG) (IT); Zizza, Fabrizio, 28100 Novara (IT)

(57) **Abstract**

A system for handling paging messages from a Mobile Switching Center (MSC) to a set of cells in a cellular communication network including radio base stations (BTS) serving said cells. Each paging message refers to a respective Location Area, and the radio base stations act under the control of a Radio Access Network (RAN) controller. The Radio Access Network (RAN) controller is configured for receiving a paging message from the Mobile Switching Center (MSC) and performing replication of the paging message received at the base station level. The paging messages are thus sent to all the base stations belonging to the Location Area referred by the paging message.

## Description

### Field of the invention

The invention relates to paging techniques in communication networks.

### Description of the related art

Communication networks such as mobile communication networks include mechanisms that seek a certain terminal when calls (or, in general, "terminated events" such as e.g. SMSs) are available for that terminal. These mechanisms make use of paging, i.e. a procedure that seeks or looks for a mobile station in a given area by broadcasting a request, which is answered only by the terminal that matches the transmitted identifier.

In 2nd generation mobile systems such as GSM, the paging procedure is initiated by the Core Network (i.e. the Mobile Switching Center or MSC), which determines the areas involved and sends a paging message to the related Base Station Controllers or BSCs. These controllers will in turn send the paging request to the cells of all the Base (Transceiver) Stations or BTSs involved in the paging process.

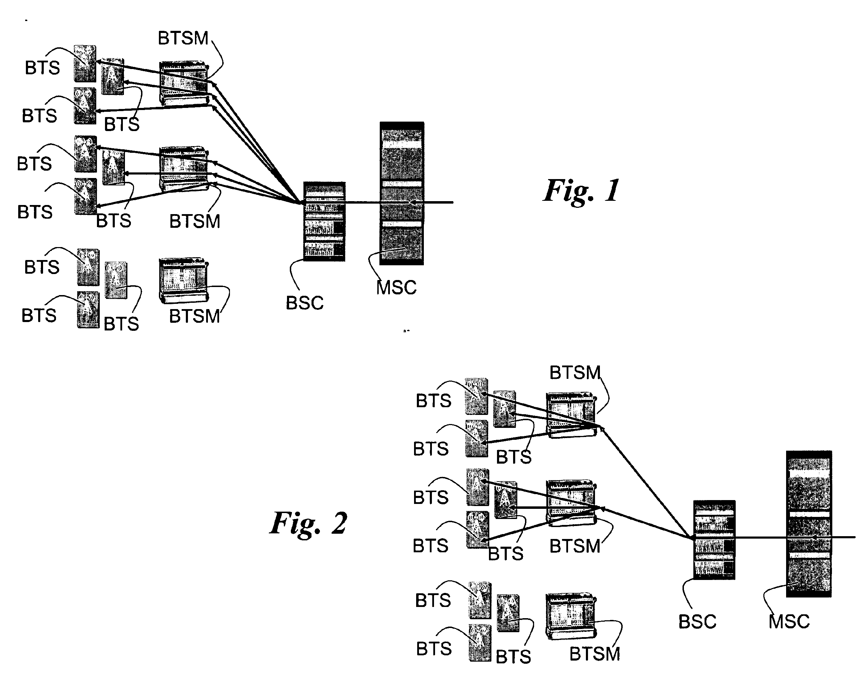

This type of operation is schematically illustrated by the functional block diagram of Figure 1, where the elements involved are designated by the corresponding acronyms (BTSM being an acronym for Base Transceiver Station Management). This standard procedure is intrinsically inefficient, this being particularly the case when "sectored" sites are considered. As Figure 1 shows, in that case, a paging command is sent on the terrestrial link connecting the Base Station Controller to the Base Station a number of times equalling the number of sectors supported by the respective sites. In the case of heavy paging traffic, this may result in using more than one signalling channel per site. This amounts to wasting a good deal of signalling bandwidth in the transport links and reducing the amount of sites that can be connected to the Base Station Controller, assuming a finite number of signalling channels per controller.

In that respect, an existing standard solution lies in increasing the amount of signalling channels connecting the Radio Access Network (RAN) controller to the base stations, which however leads to wasting resources as reported above.

### Object and summary of the invention

As demonstrated by the preceding discussion of the related art, the need is felt for improved arrangements that may obviate to the drawbacks outlined in the foregoing.

The object of the invention is thus to provide such an improved arrangement.

According to the present invention, that object is achieved by means of a method having the features set forth in the claims that follow. The invention also relates to a corresponding system as well as a related computer program product, loadable in the memory of at least one computer and including software code portions for performing the steps of the method of the invention when the product is run on a computer. As used herein, reference to such a computer program product is intended to be equivalent to reference to a computer-readable medium containing instructions for controlling a computer system to coordinate the performance of the method of the invention. Reference to "at least one computer" is evidently intended to highlight the possibility for the present invention to be implemented in a distributed/modular fashion. The claims are an integral part of the disclosure of the invention provided herein.

A preferred embodiment of the invention thus adopts a hierarchical distribution of the paging task, which uses the base stations as additional multicast elements in the paging network. When the RAN controller receives a paging message from the MSC, it performs replication at the base station level: the message is sent to all the base stations belonging to the Location Area referred by the incoming paging. When receiving the paging command, each base station involved replicates the message to the controlled cells. By applying this solution, in a typical n/n/n site configuration, the load related to paging on a terrestrial signalling channel is roughly divided by three. Additional signalling capacity may will thus be provided to the customer. Depending on the actual customer network configuration and traffic model, this can result in the availability of a higher amount of signalling channels; these channels can be used for the expansion of the RAN site by connecting additional base stations, and to increase the amount of traffic that an individual site can handle. The BSC processing load will be reduced as a side effect of shifting some broadcasting tasks to the base stations.

### Brief description of the annexed drawings

The invention will now be described, by way of example only, with reference to the enclosed figures of drawing, wherein:
- Figure 1 has already been described in the foregoing, and
- Figure 2 is a functional block diagram that illustrates the operation principle of the arrangement described herein by way of direct comparison with Figure 1.

### Detailed description of preferred embodiments of the invention

The elements shown in the functional block diagram of Figure 2 are the same as those illustrated in Figure 1. The same designations/acronyms therefore apply, namely:
MSC = Mobile Switching Center;
BSC = Base Station Controller;
BTS = Base Transceiver Station; and
BTSM = Base Transceiver Station Management.

The BSC component essentially acts as the Radio Access Network (RAN) controller, while the BSC and BTSM components of the network jointly comprise what is usually referred to as the GSM/EDGE Radio Access Network (GERAN).

Additionally, those of skill in the art will appreciate that, while the exemplary description of an embodiment of the invention provided herein is based on GSM terminology, the invention will identically apply to all those mobile networks that include elements or equipment performing the same functions or equivalent functions to those described herein.

The arrangement illustrated in Figure 2 adopts a hierarchical distribution of the paging task, which uses the base stations as additional multicast elements in the paging network.

Specifically, Figure 2 refers to the situation occurring when an incoming call to the Mobile Switching Center MSC produces (in a manner well known in the art) the generation of a paging message by the Mobile Switching Center MSC. The paging message is forwarded by the Mobile Switching Center MSC towards the BSC units and therefore towards the base stations BTS, i.e. towards the Radio Access Network (RAN).

When the RAN controller (essentially comprised of the BSC units) receives a paging message from the MSC, it performs replication at the base station level. The message is thus sent to all the base stations belonging to the Location Area referred by the incoming paging. When receiving the paging command, each base station BTSM involved replicates the message to the controlled cells.

Proper operation of the arrangement described herein takes advantage from the definition of a new paging message format at the interface between the BSC and the Base Stations. This message format is based on the existing standards, and is supplemented with the necessary information for defining the cells involved in the paging task. This will enable each base station involved to replicate the incoming paging to all the cells involved.

An example of such a message format is illustrated in the following table.

| Information Element | Reference in Abis Spec | Presence | Format | Length |
|---|---|---|---|---|
| Message Discriminator | 3.3.1 | M | V | 1 |
| Message Type | 3.3.2 | M | V | 1 |
| Channel Number | 3.3.3.1 | M | TV | 2 |
| Paging Group | 3.3.3.14 | M | TV | 2 |
| MS Identity | 3.3.3.12 | M | TLV | 2-10 |
| Channel Needed | 3.3.3.32 | 0 | TV | 2 |
| EMLPP Priority | 3.3.3.54 | 0 | TV | 2 |
| BTSM Broadcasting Info | NEW | M | | 5-74 |

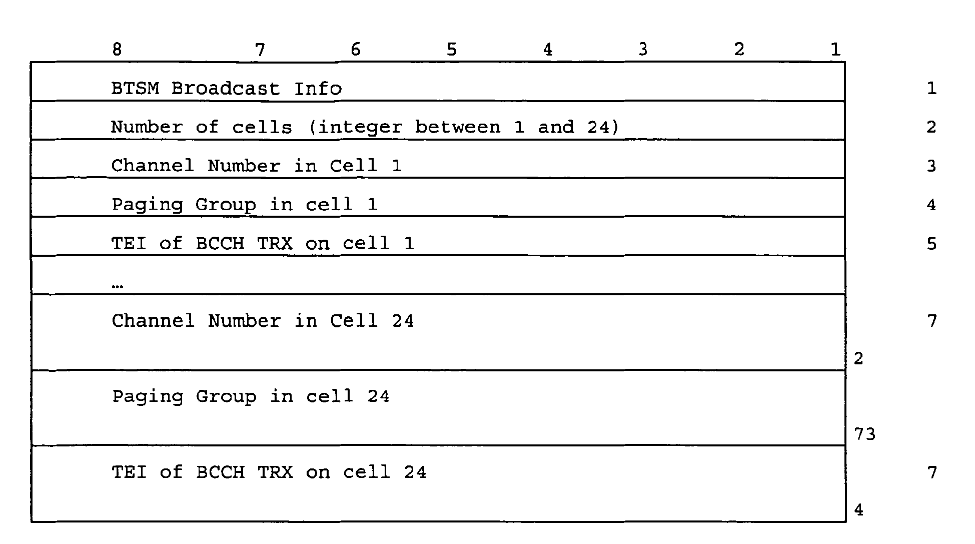

Supplementing the standard with the additional information indicated is relatively easy. The interface between the Base Station Controller BSC and the base stations is not seen by the industry as an open one: manufacturers usually provide the Base Station Controller BSC and the base stations as an individual package, since OEM aspects prevent from actually using the standard as an open interface.

The arrangement described herein provides a number of significant advantages over the existing standardised solution.

In the first place, the arrangement described herein provides a more rational exploitation of the signalling resources of the transport network, which results in defining a lower amount of terrestrial signalling channels per site.

Secondly, the arrangement described herein reduces the processing load for the Base Station Controller BSC or any equipment equivalent thereto: the processing load is shared by the Base Station Controller and the base stations, exploiting free processing power in the base stations themselves and increasing the CPU budget available for other processing tasks in the Base Station Controller. The adoption of the arrangement described herein can thus be easily tracked by comparing the amount of paging commands sent to a base station with the amount of cells it hosts.

Finally, the arrangement described herein increases the amount of sites owned by the Base Station Controller. By freeing up some terrestrial signalling channels, additional sites can be connected, which results in a higher amount of traffic served by the network, i.e. higher revenues for the operator, improved Quality of Service (QoS) for the end user.

Consequently, without prejudice to the underlying principles of the invention, the details and the embodiments may vary, even appreciably, with reference to what has been described and illustrated by way of example only, without departing from the scope of the invention as defined by the annexed claims.

## Claims

1. A method of handling paging messages from a Mobile Switching Center (MSC) to a set of cells in a cellular communication network including radio base stations (BTS) serving said cells, wherein each said paging message refers to a respective Location Area and said radio base stations act under the control of a Radio Access Network (RAN) controller, the method including the step of said Radio Access Network (RAN) controller receiving a paging message from said Mobile Switching Center (MSC) performing replication of said paging message received at the base station level, by sending said paging message to all the base stations belonging to the Location Area referred by the said paging message.

2. The method of claim 1, **characterized in that** it includes the step of each said base station (BTS) receiving a paging message, replicating said paging message to the cells served by the base station (BTS).

3. The method of either of claims 1 or 2, **characterized in that** it includes the step of supplementing said paging messages with information items indicative of the cells involved in the paging task.

4. The method of claim 3, **characterized in that** said base stations (BTS) act under the control of a Base Station Controller (BSC) and said paging messages are supplemented with said information items indicative of the cells involved in the paging task at least at the interface between the said Base Station Controller (BSC) and said base stations (BTS).

5. A system for handling paging messages from a Mobile Switching Center (MSC) to a set of cells in a cellular communication network including radio base stations (BTS) serving said cells, wherein each said paging message refers to a respective Location Area and said radio base stations act under the control of a Radio Access Network (RAN) controller, the system including said Radio Access Network (RAN) controller configured for receiving a paging message from said Mobile Switching Center (MSC) and performing replication of said paging message received at the base station level, by sending said paging message to all the base stations belonging to the Location Area referred by the said paging message.

6. The system of claim 5, **characterized in that** it includes each said base station (BTS) configured for replicating to the served cells any said paging message received by the base station (BTS).

7. The system of either of claims 1 or 2, **characterized in that** said paging messages are supplemented with information items indicative of the cells involved in the paging task.

8. The system of claim 7, **characterized in that** said base stations (BTS) act under the control of a Base Station Controller (BSC) and said paging messages are supplemented with said information items indicative of the cells involved in the paging task at least at the interface between the said Base Station Controller (BSC) and said base stations (BTS).

9. A computer program product, loadable into the memory of at least one computer and including software code portions for performing the method of any of claims 1 to 4.
